# EUROPEAN PATENT APPLICATION

(11) **EP 1 882 514 A1**
(43) Date of publication of application: **30.01.2008**
(21) Application number: 07112486.1
(22) Date of filing: 13.07.2007
(51) Int. Cl.: B01D 71/36, B01D 67/00

(54) **Durable membranes and methods for improving membrane durability**

(30) Priority: 28.07.2006 US 494873
(71) Applicant: BHA Group, Inc, Kansas City, MO 64133 (US)
(72) Inventor: King, Clare Rosemary, Providence, KS 02906 (US); Bansal, Vishal, Overland Park, KS 66223 (US)
(74) Representative: Szary, Anne Catherine

(57) **Abstract**

A durable membrane that includes a membrane (16) that is moisture vapor transmissive and resistant to liquid penetration, and a non-continuous application of a thermoplastic elastomer on a side of the membrane (16). The membrane may be an expanded polytetrafluoroethylene membrane (12). The thermoplastic elastomer may be polyurethane. The non-continuous application of thermoplastic elastomer on a side of the membrane (16) may include an application of thermoplastic elastomer that covers a portion of the surface area of the membrane (16) and leaves the remainder uncovered.

## Description

### TECHNICAL FIELD

This present application relates generally to methods and systems for improving the durability of certain membranes. More specifically, but not by way of limitation, the present application relates to methods and systems for improving the durability of membranes made from expanded polytetrafluoroethylene with non-continuous thermoplastic elastomer patterns.

### BACKGROUND OF THE INVENTION

Various known technical fabrics are suitable for use in demanding applications, such as outerwear, rainwear, sleeping bags and bivies, protective apparel, including fire service apparel, chemical-biological and first responder protective apparel, clean room garments, surgical gowns, surgical drapes, medical bedding and other types of barrier wear. These known fabrics often include a film or membrane to protect the fabric user from an external condition or environment and/or protect the external environment from contamination by the user.

Many of these demanding applications require that the membrane be: 1) breathable, including moisture vapor transmissive and 2) resistant to liquid penetration. As used herein, "moisture vapor transmissive" is used to describe a membrane that readily permits the passage of water vapor. The term "resistant to liquid penetration" is used to describe a membrane that prevents the penetration of liquid through the membrane under varying ambient conditions. The term "air permeable" describes the ability of the membrane to allow air to pass therethrough and may be measured in cfm/ft².

A membrane material that has proven to be particularly effective for such applications is an expanded polytetrafluoroethylene ("ePTFE") membrane. More specifically, ePTFE membranes are air permeable and moisture vapor transmissive, yet resistant to liquid penetration at moderate pressures. The ePTFE membrane is typically laminated to at least one suitable material, such as a base or shell fabric, to form an ePTFE laminated fabric. However, in general, ePTFE membranes and other similar membranes may have durability issues under certain conditions, even when laminated to a shell fabric. More specifically, ePTFE and other similar membranes, for example, lack durability when subjected to laundering cycles or other physical stressing or manipulation and may undergo cracking when subjected to stresses at low temperatures. Further, in many applications, the membrane's resistance to water penetration could be enhanced for better performance.

Convention methods and systems for solving these durability issues include coating or laminating a continuous polyurethane film over the membrane. However, while this may improve durability and water resistance, the polyurethane destroys the air permeability and significantly reduces the water-vapor transmissive characteristics of the membrane, which makes the resulting membrane unsuitable for many applications. Thus, there is a need for methods and systems to improve the durability and water resistance of ePTFE and other similar membranes, while also maintaining the membrane's air permeability and water-vapor transmissive characteristics.

### BRIEF DESCRIPTION OF THE INVENTION

The present application thus describes a durable membrane that includes: (1) a membrane that is moisture vapor transmissive and resistant to liquid penetration; and (2) a non-continuous application of a thermoplastic elastomer on a side of the membrane. In some embodiments, the membrane may include an expanded polytetrafluoroethylene membrane. The thermoplastic elastomer may include polyurethane.

The non-continuous application of thermoplastic elastomer on a side of the membrane may include an application of thermoplastic elastomer that covers a portion of the surface area of the membrane and leaves the remainder uncovered. The percentage of surface area of the membrane covered by the thermoplastic elastomer may be between approximately 5 and 90 percent. In some embodiments, the non-continuous application of thermoplastic elastomer on a side of the membrane may include a repeating pattern. In some embodiments, the non-continuous application of thermoplastic elastomer on a side of the membrane may include a connected pattern. In other embodiments, the non-continuous application of thermoplastic elastomer on a side of the membrane may include a repeating hexagon cell. The repeating hexagon cell may include a hexagon with a side length of approximately 0.0005 m. The lines forming the repeating hexagon cell may have a thickness of approximately 0.00008 m and a height of approximately 0.000015 m.

The durable membrane may further include an additive added to the thermoplastic elastomer before application to the membrane such that the additive has a desired effect on a characteristic of the durable membrane. In some embodiments, the additive may include an antimicrobial compound or a flame retardant.

In some embodiments, after the application of the thermoplastic elastomer, the membrane may have an air permeability of at least 0.005 cfm/ft². In other embodiments, after the application of the thermoplastic elastomer, the membrane may have an air permeability of at least 0.01 cfm/ft². In some embodiments, after the application of the thermoplastic elastomer, the membrane may have a moisture vapor transmissive rate of at least 5000 g/m²/day. In other embodiments, after the application of the thermoplastic elastomer, the membrane may have a moisture vapor transmissive rate of at least 9000 g/m²/day.

The present application may further describe a method of enhancing the durability of a membrane that is moisture vapor transmissive and resistant to liquid penetration that includes the step of applying a non-continuous application of thermoplastic elastomer to the membrane. In some embodiments, the membrane may be an expanded polytetrafluoroethylene membrane and the thermoplastic elastomer may be polyurethane.

In some embodiments, the non-continuous application of thermoplastic elastomer on a side of the membrane may include a pattern. Such embodiments may further include the step of configuring the pattern based on a desired durability characteristic of the membrane. The step of configuring the pattern based on a desired durability characteristic of the membrane may include increasing or decreasing the surface area of the membrane covered by the pattern based on the desired durability characteristic of the membrane.

In some embodiments, the method may further include the step of adding an additive to the thermoplastic elastomer before application to the membrane. Upon application of the thermoplastic elastomer to the membrane, the additive may have a desired effect on a characteristic of the membrane. These and other features of the present application will become apparent upon review of the following detailed description of the preferred embodiments when taken in conjunction with the drawings and the appended claims.

### BRIEF DESCRIPTION OF THE DRAWINGS

FIG. 1 is a schematic sectional view of a laminated fabric that includes a membrane which may be used in accordance with certain embodiments of the present invention.
FIG. 2 is an enlarged schematic plan view of a portion of the membrane illustrated in FIG. 1, viewed approximately along the line 2--2 in FIG. 1.
FIG. 3 is a top view of an exemplary membrane dot pattern according to exemplary embodiments of the present application.

### DETAILED DESCRIPTION OF THE INVENTION

As described, many demanding fabric applications require the use of membranes that are breathable, including moisture vapor transmissive, resistant to liquid penetration, and/or air permeable. A membrane material that has proven to be particularly effective for such applications is an expanded polytetrafluoroethylene ("ePTFE") membrane. More specifically, an ePTFE membrane is air permeable and moisture vapor transmissive, yet resistant (or, in some cases, immune) to liquid penetration at moderate pressures. Note that the invention described herein will be discussed primarily in relation its use with ePTFE membranes. Those of ordinary skill in the art will appreciate that this is exemplary only and that the disclosed invention may be used to improve the durability and water resistance characteristics of other similar membranes. For example, such similar membranes may include microporous polyolefins, polyurethanes, polyesters, polyamides, polyethersulfones, cellulose and the like.

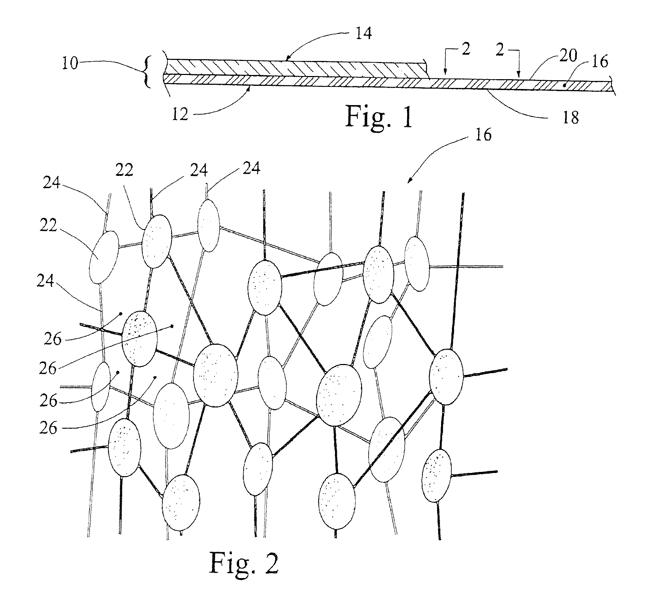

Fig. 1 illustrates a cross-section of an ePTFE laminated fabric 10, which may be used in accordance with exemplary embodiments of the present application. The ePTFE laminated fabric 10 may include a ePTFE membrane 12 and a base or shell fabric 14. The ePTFE membrane 12 may include a membrane 16, which is described in more detail below. The ePTFE membrane 12 is typically laminated to at least one suitable material, such as the shell fabric 14. The ePTFE membrane 12 and the shell fabric 14 may be laminated pursuant to a thermal lamination process, adhesive lamination process or other conventional method.

As illustrated in Fig. 2, the membrane 16 of the ePTFE membrane 12 may be porous, and preferably microporous, with a three-dimensional matrix or lattice type structure of numerous nodes 22 interconnected by numerous fibrils 24. Surfaces of the nodes 22 and fibrils 24 may define numerous interconnecting pores 26 that extend through the membrane 16 between opposite major sides 18, 20 of the membrane. The ePTFE membrane 12 may be treated such that it is oleophobic. Note that ePTFE membranes are more fully described in U.S. Patents 6,228,477; 6,410,084; 6,676,993; 6,854,603; and U.S. Published Patent Application U.S. 2004/0059717, which are incorporated herein in their entirety.

As described, ePTFE and other similar membranes, even when laminated to a base or shell fabric, may have durability issue. For example, the ePTFE membrane 12 may lack durability when subjected to laundering cycles or other physical stressing or manipulation and may undergo cracking when subjected to stresses at low temperatures. Further, in many applications, the membrane's resistance to water penetration could be enhanced for better performance.

Thus, according to the several embodiments of the present application, the durability of the ePTFE membrane 12 and other similar membranes may be enhanced through the non-continuous printing of polyurethane or other similar thermoplastic elastomer onto the ePTFE membrane 12. As used herein, a non-continuous printing means an application of polyurethane onto the ePTFE membrane 12 such that the polyurethane does not form a continuous film or layer over the surface area of the ePTFE membrane 12, i.e., the polyurethane covers a portion of the surface area of the ePTFE membrane 12 and leaves the remainder uncovered. Typically, according to several exemplary embodiments, the polyurethane will cover a percentage of the surface area of the ePTFE membrane 12 and leave the remainder uncovered. The amount of surface area covered by the polyurethane may be between approximately 5 and 90 percent. As discussed in more detail below, the non-continuous printing may be completed such that a repeating pattern is formed on the ePTFE membrane 12. As one of ordinary skill in the art would appreciate, such printing or dot printing may be done using a gravure roll printing process. A gravure roll with the desired shape and density of the dot pattern may be selected.

The partial coverage of the surface area of the ePTFE membrane 12 by the polyurethane may decrease the air permeability and moisture vapor transmissive characteristics of the membrane 12. However, as discussed, embodiments of the present application maintain ePTFE membrane surface area that is not covered by the polyurethane. Thus, the air permeability and moisture vapor transmissive characteristics of the membrane 12 remain, though they may be reduced depending on the amount of surface area covered by the polyurethane. For example, the air permeability of the ePTFE membrane 12 may be approximately 0.3 cfm/ft² (as tested per ASTM D737 procedures). The air permeability for the same ePTFE membrane with an application of polyurethane per embodiments of the present application may be at least 0.005 cfm/ft², and more generally be approximately 0.01 cfm/ft².

In regard to the moisture vapor transmissive characteristic, for example, the moisture vapor transmissive rate ("MVTR") of an uncoated ePTFE membrane 12 may be approximately 35,000 g/m²/day (as tested per JIS L 1099 B-2 procedures). The MVTR for the same ePTFE membrane with an application of polyurethane per embodiments of the present application may be at least 5,000 g/m²/day, and more generally be approximately 9,000 g/m²/day. The Thus, the printed polyurethane, according to the embodiments of the present application, may allow for increased durability to ePTFE membrane 12 while still allowing the membrane 12 to maintain some of its air permeability and moisture vapor transmissive characteristics.

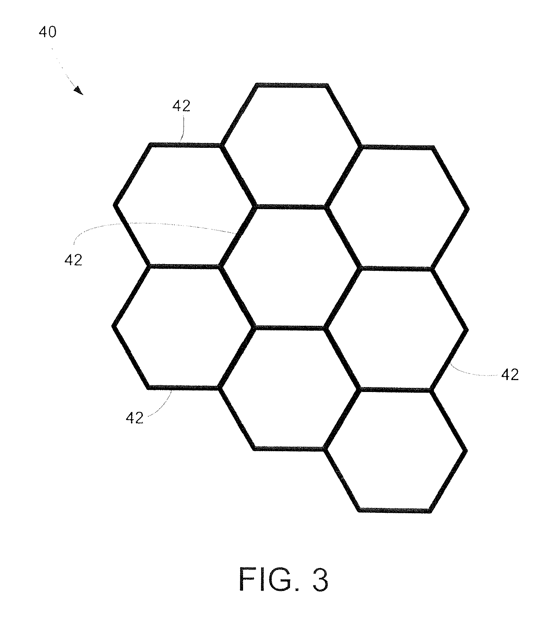

In one exemplary embodiment, a hydrophilic polyurethane may be applied to the ePTFE membrane 12 with the gravure printing process. Those of ordinary skill in the art will appreciate that other types of thermoplastic elastomers may be used, such as a block co-polymer of atactic-isotactic polypropylene, Hytrel®, Pebax®, Krayton® and the like, and that the description of hydrophilic polyurethane is exemplary only. As illustrated in Fig. 3, the pattern that is printed on the ePTFE membrane 12 may be a repeating hexagonal cell 40. The solid lines 42 of the hexagonal pattern represent the locations where hydrophilic polyurethane is applied onto the ePTFE membrane 12. The polyurethane may be applied to one or both sides of the ePTFE membrane 12.

The durability of the ePTFE membrane 12 may be enhanced by the printing of polyurethane. As one of ordinary skill in the art would appreciate, the Mullen hydrostatic value is an effective measure of membrane durability. It is defined as hydrostatic pressure required to cause the membrane to burst when supported by a Nylon Taffeta fabric for support. The measurement is done per ASTM D-751 procedure. Taking the current embodiment, for example, the ePTFE membrane 12 without the polyurethane printing may have a Mullen burst strength of approximately 80 psig. Once the ePTFE membrane 12 has been printed with the polyurethane (as illustrated in Fig. 3 and discussed in more detail below), the burst strength may increase to approximately 105 psig.

The shape, configuration and density of the pattern may be selected based on the properties desired in the end-product, i.e., the durability required in the printed ePTFE membrane 12. In the exemplary embodiment of Fig. 3, the length of the side of the hexagon cell 40 in the pattern may be approximately 0.0005 m. The thickness of the printed polyurethane lines 42 may be approximately 0.00008 m. The height of the printed polyurethane lines 42 from the surface of the ePTFE membrane 12 may be approximately 0.000015 m. Note that this exemplary height measurement does not include the portion of the printed polyurethane lines 42 that, upon application, penetrates into the lattice type structure of the ePTFE membrane 16. In general, the polyurethane may penetrate between approximately 5% and 80% into the thickness of the ePTFE membrane 16. In part, at least, it is this penetration that provides the membrane 16 with an elastic structural reinforcement, which improves the durability of the membrane 16 as well as its resistance to cracking at low temperatures. The measurements, i.e., the length of the side of the hexagon cell 40 and thickness and height of the printed polyurethane lines 42, may be increased or decreased significantly depending on the application.

Further, the shape of the pattern may be manipulated or configured depending on the application. For example, a repeating square pattern (not pictured) or a repeating "X" pattern (not pictured) may be used. Similar to the repeating hexagon cell 40 pattern, such a pattern may form a connected pattern. As used herein, a connected pattern refers to pattern in which the lines 42 of printed polyurethane connect, which in the case of a repeating pattern means that the lines 42 of printed polyurethane connect between the neighboring repeating cells. Note that in some alternative embodiments, non-repeating patterns may be used. These patterns also may form a connected pattern, as the printed lines 42 of polyurethane may be connected. Further, in some alternative embodiments, non-connected patterns may be used, though durability may be enhanced more efficiently through the use of connected patterns.

In some applications, a higher density pattern or one that results in more covered surface area may be used such that a more durable ePTFE membrane 12 is realized. This also may be achieved by increasing the thickness or height of the printed polyurethane lines 42. In other embodiments, this may be achieved by smearing the printed polyurethane lines after application such that greater surface area coverage is achieved. In such an embodiments, because of the greater surface area coverage by the non-breathable polyurethane, the air permeability and water-vapor tranmissive characteristics of the ePTFE membrane 12 may be lessened somewhat. However, because polyurethane's resistance to water is more effective than that of the ePTFE membrane 12, the resistance to water penetration will be enhanced in the areas of the ePTFE membrane 12 that is covered by the polyurethane.

As one of ordinary skill in the art will appreciate, a wide range of polyurethanes or other thermoplastic elastomers may be suitable for printing onto the ePTFE membrane 12 to enhance the membrane's durability. In general, polyurethanes are a large family of polymers with widely ranging properties all based on the reaction product of an organic isocyanate with compounds containing a hydroxyl group. Polyurethanes may be rigid and hard or flexible and soft. The type of polyurethane used may be selected based upon the characteristics desired for the resulting ePTFE membrane 12.

In alternative embodiments, certain additives (organic or inorganic) may be added to the polyurethane or similar thermoplastic elastomer before it is printed onto the ePTFE membrane 12 or other similar membrane. For example, an antimicrobial compound, such as nanoparticulate silver metal or other similar antimicrobial compound may be added to the thermoplastic elastomers before it is printed onto the ePTFE membrane 12. An antimicrobial compound may provided beneficial antimicrobial characteristics to membranes that are used in medical applications.

Other examples of such additives include pigments or dyes. Examples of such pigments include TiO₂, copper phthalocyanine and the like. The pigment or dye additives may be used to impart coloration, decoration, or opacity to the membrane. Flame retardants also may be added to the thermoplastic elastomers before it is printed onto the ePTFE membrane 12 such that the membrane's resistance to fire is enhanced. Examples of flame retardants that may be used include polybrominated diphenyl ethers and the like. Other types of beneficial additives also may be used in addition to the ones described above such that, along with the durability enhancement provided to the ePTFE membrane 12, the printed polyurethane with that additive may enhance other characteristics in the resulting ePTFE membrane 12.

In use, the ePTFE membrane 12 with non-continuous printing of polyurethane may be employed in demanding applications where the durability enhancement may be beneficial. The air permeability and breathability characteristics of the membrane will remain to a significant degree, while the printed polyurethane pattern will provide a greater resistance to water penetration (because polyurethane provides a surface area that is particularly resistance to water penetration), enhanced durability (for example, so that it may better withstand laundering cycles and other physical stressing), and better resistance to membrane cracking at low temperatures. If additives are added to the polyurethane before it is applied to the membrane, other membrane characteristics may be enhanced.

From the above description of preferred embodiments of the invention, those skilled in the art will perceive improvements, changes and modifications. Such improvements, changes and modifications within the skill of the art are intended to be covered by the appended claims. Further, it should be apparent that the foregoing relates only to the described embodiments of the present application and that numerous changes and modifications may be made herein without departing from the scope of the application as defined by the following claims and the equivalents thereof.

## Claims

1. A durable membrane, comprising:
a membrane (16) that is moisture vapor transmissive and resistant to liquid penetration; and
a non-continuous application of a thermoplastic elastomer on a side of the membrane.

2. The durable membrane of claim 1, wherein the membrane (16) comprises an expanded polytetrafluoroethylene membrane (12).

3. The durable membrane of claim 1 or claim 2, wherein the thermoplastic elastomer comprises polyurethane (42).

4. The durable membrane of any preceding claim, wherein the non-continuous application of thermoplastic elastomer on a side of the membrane (16) comprises an application of thermoplastic elastomer that covers a portion of the surface area of the membrane (16) and leaves the remainder uncovered.

5. The durable membrane of claim 4, wherein the percentage of surface area of the membrane (16) covered by the thermoplastic elastomer is between approximately 5 and 90 percent.

6. The durable membrane of claim 4, wherein the non-continuous application of thermoplastic elastomer on a side of the membrane (16) comprises a repeating pattern.

7. The durable membrane of claim 4, wherein the non-continuous application of thermoplastic elastomer on a side of the membrane (16) comprises a repeating hexagon cell (40), the repeating hexagon cell (40) comprising a hexagon with a side length of approximately 0.0005 m; and
wherein the lines forming the repeating hexagon cell (40) have a thickness of approximately 0.00008 m and a height of approximately 0.000015 m.

8. The durable membrane of any preceding claim, wherein, after the application of the thermoplastic elastomer, the membrane (16) comprises an air permeability of at least 0.005 cfm/ft².

9. The durable membrane of any preceding claim, wherein, after the application of the thermoplastic elastomer, the membrane (16) comprises an air permeability of at least 0.01 cfm/ft².

10. The durable membrane of any preceding claim, wherein, after the application of the thermoplastic elastomer, the membrane (16) comprises a moisture vapor transmissive rate of at least 5000 g/m²/day.
